(19) Europäisches Patentamt
European Patent Office
Office européen des brevets

(11) Veröffentlichungsnummer: 0 014 983
B1

(12) **EUROPÄISCHE PATENTSCHRIFT**

(45) Veröffentlichungstag der Patentschrift: 28.12.83

(51) Int. Cl.³: C 07 F 3/02

(21) Anmeldenummer: 80100809.5

(22) Anmeldetag: 18.02.80

# (54) Verfahren zur Herstellung von Diorganomagnesiumverbindungen.

(30) Priorität: 20.02.79 AT 1314/79

(43) Veröffentlichungstag der Anmeldung: 03.09.80 Patentblatt 80/18

(45) Bekanntmachung des Hinweises auf die Patenterteilung: 28.12.83 Patentblatt 83/52

(84) Benannte Vertragsstaaten: AT BE CH DE FR GB IT LU NL SE

(56) Entgegenhaltungen:
DE - A - 2 804 445
US - A - 2 959 625
US - A - 2 985 692

J.C.S. Chem. Comm. 30-31 (1978)

(73) Patentinhaber: Studiengesellschaft Kohle mbH
Kaiser-Wilhelm-Platz 1
D-4330 Mülheim/Ruhr (DE)

(72) Erfinder: Boqdanovic, Borislav, Dr. Prof. Dipl.-Chem.
Lembkestrasse 32
D-4330 Mülheim-Ruhr (DE)

(74) Vertreter: von Kreisler, Alek, Dipl.-Chem. et al,
Deichmannhaus am Hauptbahnhof
D-5000 Köln 1 (DE)

EP 0 014 983 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Herstellung von Diorganomagnesiumverbindungen

Die Erfindung betrifft ein katalytisches Verfahren zur Herstellung von Diorganomagnesiumverbindungen durch Umsetzung von Magnesiumhydrid bzw. von Magnesium und Wasserstoff mit Olefinen, wie es in den Patentansprüchen dargelegt ist.

Diorganomagnesiumverbindungen werden üblicherweise ausgehend von Grignard-Verbindungen dargestellt, indem diese mit Dioxan oder anderen Lewis-Basen disproportioniert werden (K. Nützel in Houben-Weyl "Methoden der organischen Chemie", Band 13/2a, S. 197).

$$2\ RMgX \rightarrow R_2Mg + MgX_2 \qquad (1)$$

Nach dem US-Patent 4.069.267 und der dort zitierten Patentliteratur lassen sich Diorganomagnesiumverbindungen durch Umsetzung von Magnesium mit Alkylhalogeniden und anschließend mit Lithiumalkylen in Kohlenwasserstoffen herstellen. Ein Nachteil des letzgenannten Verfahrens ist die Notwendigkeit der Verwendung teuerer Lithiumalkyle.

Versuche, Diorganomagnesiumverbindungen direkt aus Magnesium, Olefin und Wasserstoff herzustellen, waren bisher wenig erfolgreich. Nach H. E. Podall und W. E. Foster (J. Org. Chem., *23*, 1848 (1958)) liefert eine nichtkatalysierte Reaktion von Magnesiumhydrid mit Äthylen und anderen $\alpha$-Olefinen in verschiedenen Medien und unter verschiedenen Reaktionsbedingungen Dialkylmagnesiumverbindungen in nur geringen Ausbeuten. Setzt man z.B. ein aus Magnesium und Wasserstoff, oder nach anderen Methoden synthetisiertes Magnesiumhydrid mit Äthylen um, so werden nur 4—7% Diäthylmagnesium erhalten. Die maximale Ausbeute an Diäthylmagnesium von 28% wird nur dann erreicht, wenn sogenanntes "aktives Magnesiumhydrid" eingesetzt wird, das aus Lithiumaluminiumhydrid und Diäthylmagnesium hergestellt ist. Voraussetzung für diese Synthese ist demnach, daß auf anderem Wege hergestelltes Diäthylmagnesium als Ausgangsmaterial verwendet wird.

Über eine mit 5 Mol% Bis(cyclopentadienyl)titandichlorid ($Cp_2TiCl_2$) katalysierte Addition von Magnesiumhydrid an Olefine und Alkine in Tetrahydrofuran wurde kürzlich berichtet (E. C. Ashby, T. Smith, J. C. S. Chem. Comm., 30 (1978)). Auch in diesem Full wurde jedoch ein aus Diäthylmagnesium und $LiAlH_4$ dargestelltes "aktives Magnesiumhydrid" verwendet. Für die Darstellung von Diorganomagnesiumverbindungen in technichem Maßstab kommen diese Methoden daher nicht infrage.

E. C. Ashby et al berichten an gleicher Stelle, daß die binären Halogenide $TiCl_3$ oder $ZrCl_4$ nicht geeignet sind, die Addition von Olefinen an Magnesiumhydrid unter Bildung von Diorganomagnesiumverbindungen zu katalysieren. Zwar sind diese wie auch andere Übergangsmetallverbindungen in der Hydrierung von 1-Octen katalytisch wirksam, eine Addition von Olefinen an Magnesiumhydrid unter Bildung von Diorganomagnesiumverbindungen bewirken sie jedoch nicht.

Die Herstellung von Alkylmagnesiumverbindungen ist ebenfalls Gegenstand der beiden US-Patentschriften 2 959 625 und 2 985 692. Verbindungen der Metalle der IV. bis VIII. Nebengruppe des periodischen Systems werden in diesen Patentschriften nicht genannt. Vielmehr wird die Bildung von Diorganomagnesiumverbindungen in Gegenwart von Alkylen oder Hydriden der Elemente Aluminium, Bor oder Zink bzw. in Gegenwart koordinierender schwefelhaltiger Verbindungen, wie Thioether, Sulfoxiden oder Sulfonen beschrieben.

Nach der deutschen Patentanmeldung P 28 04 445.3 bzw. der korrespondierenden OE-Anmeldung A 738/79 (Studiengesellschaft (Kohle mbH.) lassen sich Magnesium und Wasserstoff katalytisch unter milden Bedingungen in Magnesiumhydrid, in z.B. THF, umwandeln, indem Kombinationen aus einer Verbindung eines Übergangsmetalles der 4. bis 8. Nebengruppe und einer metallorganischen Verbindung bzw. einem Hydrid der Metalle der 1. bis 3. Hauptgruppe des Periodensystems als Katalysatoren verwendet werden. Gegebenenfalls wird die Hydrierung in Gegenwart eines Aktivators wie z.B. eines polycyclischen Aromaten und/oder eines tertiären Amins durchgeführt.

Es wurde nun überraschenderweise gefunden, daß in der DE—OS 28 04 445.3 für die Hydrierung von Magnesium zu Magnesiumhydrid genannte Katalysatoren zusätzlich als Katalysatoren für die Addition an Olefine gemäß den Patentansprüchen der vorliegenden Erfindung wirksam sind. Das vorliegende Verfahren, in Kombination mit dem genannten Verfahren zur Herstellung von Magnesiumhydrid, gestattet daher einen direkten Zugang zu Diorganomagnesiumverbindungen aus Magnesium, Wasserstoff und Olefinen. Die Synthese wird im allgemeinen so durchgeführt, daß in der ersten Stufe Magnesium in Gegenwart eines Katalysators unter möglichst milden Bedingungen, z.B. bei 20°C, hydriert wird und in der zweiten Stufe Magnesiumhydrid in Gegenwart desselben Katalysators unter veränderten Bedingungen, z.B. bei erhöhter Temperatur, mit einem Olefin umgesetzt wird. Es besteht jedoch auch die Möglichkeit, Magnesium in Gegenwart der erfindungsgemäßen Katalysatoren gleichzeitig mit Wasserstoff und Olefinen zu Diorganomagnesiumverbindungen umzusetzen.

Die Umsetzung wird in der Regel in einem Lösungsmittel durchgeführt. Als bevorzugtes Lösungsmittel wird THF oder Diglyme verwendet. Aber auch Dioxan oder Äther sind brauchbar.

Bevorzugte Übergangsmetallhalogenide sind Chrom- und Titanhalogenide, und die bevorzugte magnesiumorganische Verbindung ist Magnesiumanthracen.

Als Aktivatoren werden polycyclische Aromaten, wie z.B. Naphthalin, Tetracen, Pentacen, Phenanthren, Perylen und insbesondere Anthracen und/oder tert. Amine $NR_3$ mit R=Alkyl-, Cycloalkyl- oder Arylgruppen, wie z.B. Triäthylamin oder Tributylamin oder Pyridine eingesetzt.

Erfindungsgemäß können die Katalysatoren im Atom-Verhältnis Mg: Übergangsmetall von $10^4$ bis 10:1 eingesetzt werden, wobei das Molverhältnis Übergangsmetallverbindung: magnesiumorganischer Verbindung bzw. Magnesiumhydrid von 0,1 bis 10:1 gewählt werden kann.

Bevorzugte Olefine für die efindungsgemäße Reaktion sind $\alpha$-Olefine vom Typ $Ch_2$=CHR' mit R'=H, Akyl, Cycloalkyl, Aryl oder Aralkylgruppen, wobei das Verhältnis Olefin: Magnesium von 2 bis 10:1 gewählt werden kann. Man arbeitet bei Temperaturen von 0°C bis 200°C, bevorzugt jedoch von 50 bis 150°C, sowie bei Drucken von 1 bis 300 bar.

Das erfindungsgemäße Verfahren ermöglicht erstmals eine technische Herstellung von hochreaktionsfähigen Diorganomagnesiumverbindungen aus Magnesium, Wasserstoff und Olefinen unter Umgehung der Reaktion von organischen Halogenverbindung mit Magnesium (Grignard-Methode). Es eröffnet auch einen neuen Weg zu Grignard-Verbindungen, bei dem im Vergleich zur Grignard-Methode

$$R_2Mg + MgX_2 \rightarrow 2\ RMgX \qquad (2)$$

nur eine Hälfte des Magnesiums als metallisches Magnesium aufgewendet werden muß: Gleichung (2)

Die nach dem vorliegenden Verfahren herstellbaren Diorganomagnesiumverbindungen können als Katalysatoren für die Herstellung hochaktiver Ziegler-Katalysatoren für die Polymerisation von Äthylen und stereospezifischen Polymerisation von $\alpha$-Olefinen und Diolefinen angewendet werden (Chemical Week, 29.11.1978, S. 40). Außerdem können Diorganomagnesiumverbindungen für jene synthetischen Zwecke eingesetzt werden, für die andere metallorganische Verbindungen, insbesondere lithiumorganische und Grignard-Verbindungen, infrage kommen bzw. angewendet werden. Im Vergleich zu Grignard-Verbindungen ist die höhere Reaktivität von Diorganomagnesiumverbindungen von Vorteil.

Beispiele

Sämtliche Versuche zur Darstellung magnesiumorganischer Verbindungen werden in einer Schutzatmosphäre (z.B. Argon) durchgeführt.

Beispiel 1

Katalytische Hydrierung von Magnesium zu Magnesiumhydrid (gemäß der deutschen Patentanmeldung P 28 04 445.3): 5.50 g (0.23 Mol) Magnesiumpulver (50 mesh) werden in 100 ml abs. THF suspendiert, die Suspension mit 0.05 ml Äthylbromid, und nach halbstündigem Rühren mit 0.50 g (2.8 mMol) Anthracen versetzt. Nach dreistündigem Rühren der Probe (Bildung des Magnesiumanthracens) wird 0.48 g (3.0 mMol) $CrCl_3$ (wasserfrei) zugegeben und weitere 15—20 Min. gerührt. Die olivgrüne Suspension wird in einem mit Glaseinsatz und Magnetrührer ausgestatteten 0.5 l Autoklaven hydriert. Der Anfangswasserstoffdruck beträgt 90 Bar, nach 18-stündigem Rühren des Autoklaveninhalts bei 18—20°C fällt der Druck auf 75 Bar und bleibt bei weiterem Rühren konstant, was die vollständige Hydrierung des Magnesiums anzeigt.

Katalysierte Addition von Magnesiumhydrid an Äthylen zu Magnesiumdiäthyl: Nach der Hydrierung wird der Autoklav auf 1 Bar entspannt, Äthylen (ohne Rühren) bis zu einem Druck von 60 Bar aufgepreßt und bei 85—90°C gerührt. Um den Zeitablauf der $MgH_2$-Addition an Äthylen zu bestimmen, wird in vier der oben beschriebenen Ansätze die katalytische Reaktion nach jeweils 2.5, 6, 24 und 70 Stdn. abgebrochen, indem der Autoklaveninhalt auf Raumtemperatur abgekühlt und Äthylen auf Normaldruck entspannt wird. Der Gehalt an Magnesiumdiäthyl in den einzelnen Ansätzen wird bestimmt, indem 5 ml der jeweiligen Suspension von $MgH_2$ filtriert (D-4 Glasfritte), 1.0 ml des Filtrats hydrolysiert und das dabei entstandene $Mg(OH)_2$ bzw. Äthan acidimetrisch bzw. volumetrisch und massenspektrometrisch bestimmt wird. Nach 2.5, 6, 24 bzw. 70 Stdn. Reaktionszeit bei 85—90°C beträgt die Ausbeute an Magnesiumdiäthyl 44, 71, 81 bzw. 82%, was bedeutet, daß unter den gegebenen Reaktionsbedingungen die katalysiche $MgH_2$-Addition an Äthylen nach 20—24 Stdn. praktisch beendet ist.

Beispiel 2

Zu einer Suspension von 5.50 g (0.23 Mol) Magnesiumpulver (50 mesh) in 90 ml THF werden 0.05 ml Äthylbromid und nach halbstündigem Rühren 0.51 g (2.9 mMol) Anthracen zugegeben. Nach 3-stündigem Rühren wird die Suspension mit 0.57 g (3.0 mMol) $TiCl_4$ gelöst in 10 ml THF versetzt und weitere 15 Min. gerührt. Die Probe wird—wie im Beispiel 1 beschrieben—innerhalb von 22 Stdn. bei 20°C hydriert, wobei der Wasserstoffdruck im Autoklaven von 88 auf 75 Bar abfällt. Danach wird auf Normaldruck entspannt, Äthylen bis auf 60 Bar aufgepreßt und 22 Stdn. bei 90°C gerührt. Die Ausbeute an Magnesiumdiäthyl—bestimmt wie in Beispiel 1 beschrieben—beträgt 81%.

Beispiel 3

Zu einer Suspension von 5.50 g (0.23 Mol) Magnesiumpulver (50 mesh) in 90 ml THF werden 0.05 ml Äthylbromid und nach halbstündigem Rühren 0.80 g (4.5 mMol) Anthracen zugegeben. Nach 3-stündigem Rühren wird der Suspension 0.87 g (4.6 mMol) $TiCl_4$, gelöst in 10 ml THF zugegeben und weitere 15—20 Min. gerührt. Die Probe wird, wie im Beispiel 1 beschrieben, innerhalb von 26 Stdn. bei 20°C hydriert. In dieser Zeit fällt der Wasserstoffdruck von 90 auf 76 Bar. Der Autoklav wird auf Normaldruck entspannt, 30 g (0.71 Mol) Propen zu dem Autoklaveninhalt gegeben und die Mischung 72 Stdn. bei 85°C gerührt. Danach wird der Autoklav and Raumtemperatur abgekühlt und das überschüssige Propen abgeblasen. Die kaum noch trübe schwarze Lösung wird durch eine D-4 Glasfritte filtriert. 1.0 ml des Filtrats (von insgesamt 82.0 ml) verbrauchen bei der acidimetrischen Titration 52.4 ml 0.1 N HCl, entsprechend einer Ausbeute an $Mg(C_3H_7)_2$ von 95%. Die hydrolyse eines aliquoten Teils der Lösung liefert nahezu die.berechnete Menge Propan neben einem kleinen Anteil an Propen und Wasserstoff—entstanden durch die thermische Zersetzung des $Mg(C_3H_7)_2$ bei der Hydrolyse.

Beispiel 4

Der Versuch wurde analog dem Beispiel 3 durchgeführt, wobei eine 2.5-fach größere Menge des Katalysators (2.0 g Anthracen und 2.2 g $TiCl_4$) verwendet wurde. Die Ausbeute an $Mg(C_3H_7)_2$ beträgt 98%.

Beispiel 5

Zu einer Suspension von 5.50 g (0.23 Mol) Magnesiumpulver (50 mesh) in 100 ml THF werden 0.05 ml Äthylbromid und nach halbstündigem Rühren 0.52 g (2.9 mMol) Anthracen zugegeben. Nach 3-stündigem Rühren wird der Suspension 0.47 g (3.0 mMol) $CrCl_3$ hinzugefügt und weitere 15—20 Min. gerührt. Die Probe wird, wie in Beispiel 1 beschrieben, innerhalb von 20 Std. bei 20°C hydriert; dabei fällt der Wasserstoffdruck von 90 auf 76 Bar. Der Autoklav wird auf Normaldruck entspannt und zu dem Ansatz eine weitere Menge des Katalysators (aus 0.50 g Mg, 0.03 ml $C_2H_5Br$, 0.50 g Anthracen und 0.46 g $CrCl_3$, wie oben beschrieben hergestellt), sowie 50 g (1.2 Mol) Propen gegeben. Der Ansatz wird darauf 70 Stdn. bei 120°C gerührt. Die Ausbeute an $Mg(C_3H_7)_2$, bestimmt wie im Beispiel 4 beschrieben, beträgt 25%.

Beispiel 6

Der Versuch wurde analog dem Beispiel 4 durchgeführt, indem anstelle des Propens 1-Buten (85.0 g=1.5 Mol) zur Reaktion mit Magnesiumhydrid eingesetzt wurde. Die Ausbeute an $Mg(C_4H_9)_2$ nach 48 Stdn. Reaktionszeit bei 80°C beträgt 90—95%.

Beispiel 7

Der Versuch wurde analog dem Beispiel 4 durchgeführt, indem anstelle des Propens 84.0 g (0.75 Mol) 1-Octen zur Reaktion mit Magnesiumhydrid eingesetzt wurde. Die Ausbeute an $Mg(C_8H_{17})_2$ nach 48 Stdn. Reaktionszeit bei Siedetemperatur der Mischung (bei Normaldruck) beträgt 55—60%.

Beispiel 8

5.50 g (0.23 Mol) Magnesiumpulver (50 mesh) werden in 100 ml abs. THF suspendiert, die Suspension mit 0.5 ml Athylbromid und nach halbstündigem Rühren mit 0.80 g (4.5 mMol) Anthracen versetzt. Nach dreistündigem Rühren der Probe (Bildung des Magnesiumanthracens) wird 0.86 g (4.5 mMol) $TiCl_4$ in 10 ml THF suspendiert zugegeben und weitere 15—20 Minuten gerührt. Die dunkelviolette Suspension wird in einem mit Glaseinsatz und Magnetrührer ausgestatteten 0.5 l-Autoklaven mit Wasserstoff und Äthylen umgesetzt. Hierfür werden (ohne Rühren) bei 20°C nacheinander 50 Bar Äthylen und 50 Bar Wasserstoff aufgepreßt (Gesamtdruck 100 Bar) und anschließend der Autoklaveninhalt 24 Stdn. bei 85°C gerührt. Der Autoklav wird auf Raumtemperatur abgekühlt und auf Normaldruck entspannt. Der Ansatz wird filtriert, 1.0 ml des Filtrates hydrolysiert und das dabei entstandene $Mg(OH)_2$ bzw. Athan acidimetrisch bzw. volumetrisch und massenspekrometrisch bestimmt. Die Ausbeute an Magnesiumdiäthyl beträgt 56% d. Th.

Beispiel 9

Zur Herstellung des Katalysators werden 0.5 g (20.6 mMol) Magnesiumpulver (50 mesh) in 100 ml THF suspendiert, die Suspension mit 0.2 ml Äthylbromid und nach halbstündigem Rühren mit 0.71 g (4.0 mMol) Anthracen versetzt. Nach dreistündigem Rühren der Probe (Bildung des Magnesiumanthracens) wird 0.52 g (4.0 mMol) wasserfreies $NiCl_2$ zugegeben und weitere 15—20 Min. gerührt. Zu der olivgrünen Katalysatorlösung wird 5.3 g des nach der deutschen Patentanmeldung P 28 04 445.3 hergestellten Magnesiumhydrids gegeben und der Ansatz in einem mit Glaseinsatz und Magnetrührer ausgestatteten 0.5 l-Autoklaven mit Äthylen umgesetzt. Hierfür wird (ohne Rühren) bei 20°C Athylen bis zu einem Druck von 60 Bar aufgepreßt und anschließend der Autoklaveninhalt 24 Stdn. bei 90°C. gerührt. Der Autoklav wird auf Raumtemperatur abgekühlt und auf Normaldruck entspannt. Die Suspension wird filtriert, 1.0 ml des Filtrats hydrolysiert und das dabei

entstandene $Mg(OH)_2$ bzw. Äthan acidimetrisch bzw. volumetrisch und massenspektometrisch bestimmt. Die Ausbeute an Magnesiumdiäthyl beträgt ca. 50% d. Th.

Beispiel 10

Beispiel 10 wird analog und mit gleichen Stoffmengen wie Beispiel 9 durchgeführt, bis auf daß anstelle von $NiCl_2$ $VCl_4$ (0.77 g=4.0 mMol) als Katalysatorkomponente verwendet wird. Die Ausbeute an Magnesiumdiäthyl beträgt 81% d. Th.

Beispiel 11

Eine Suspension von 0.5 g (20.6 gAtom) Magnesiumpulver (50 mesh) in 5 ml abs. THF wird mit 0.05 ml Äthylbromid und nach halbstündigem Rühren mit 0.80 g (4.5 mMol) Anthracen versetzt. Nach dreistündigem Rühren der Probe (Bildung des Magnesiumanthracens) wird 0.50 ml (4.5 mMol) $TiCl_4$ in 5 ml THF suspendiert zugegeben und weitere 15—20 Min. gerührt. Zu der dunkelvioletten Katalysatorlösung werden 90 ml Toluol und 6.20 g des nach der deutschen Patentanmeldung P 28 04 445.3 hergestellten Magnesiumhydrids gegeben und der Ansatz in einem mit Glaseinsatz und Magnetrührer ausgestatteten 0.5 l-Autoklaven mit Äthylen umgesetzt. Hierfür wird (ohne Rühren) bei 20°C Äthylen bis zu einem Druck von 90 Bar aufgepreßt und anschließend der Autoklaveninhalt 24 Stdn. bei 120°C gerührt. Der Autoklav wird auf Raumtemperatur abgekühlt und auf Normaldruck entspannt. Die Suspension wird filtriert, ein aliquoter Teil des Filtrats wird hydrolysiert und das dabei entstandene $Mg(OH)_2$ bzw. Äthan acidimetrisch bzw. volumetrisch und massenspektrometrisch bestimmt. Die Ausbeute an Magnesiumdiäthyl beträgt 37% d. Th.

Beispiel 12

4.35 g (0.18 Mol) Magnesiumpulver (50 mesh) in 100 ml abs. THF werden mit 0.05 ml Ethylbromid und nach halbstündigem Rühren mit 0.64 g (3.6 mMol) Anthracen versetzt. Nach dreistündigem Rühren des Ansatzes wird 0.58 g (3.7 mMol) $CrCl_3$ (wasserfrei) zugegeben und weitere 15 Min. gerührt. Der Ansatz wird anschließend in einem mit Glaseinsatz und Magnetrührer ausgestatteten 0.5 l Autoklaven während 20 Stdn. bei 60 bar Wasserstoffdruck bei Raumtemperatur hydriert, wobei Magnesium quantitativ in Magnesiumhydrid umgewandelt wird. Zu der so erhaltenen Magnesiumhydrid-Suspension in THF wird nun ein zweiter Katalysator, hergestellt aus 0.50 g (21 mMol) Magnesiumpulver, 0.03 ml Ethylbromid, 0.64 g (3.6 mMol) Anthracen und 0.83 g (3.6 mMol) $ZrCl_4$ (wasserfrei) in 10 ml THF, zugegeben. Die Herstellung des Zirkonkatalysators erfolgt in der gleicher Weise wie oben für den Chromkatalysator beschrieben. Zur Magnesiumhydridsuspension werden bei Rückflußtemperatur innerhalb von 5 Stdn. 65 ml (47.0 g 0.42 Mol) 1-Octen tropfenweise gegeben und der Ansatz noch eine weitere Stunde bei Siedetemperatur gerührt. Die Ausbeute an $Mg(C_8H_{17})_2$ nach dieser Zeit beträgt 72% und nach weiterem 8-stündigem Rühren des Ansatzes bei Siedetemperatur 90—95% d. Th.

Beispiel 13

0.50 g (21 mMol) Magnesiumpulver (50 mesh) in 100 ml abs. THF werden mit 0.05 ml Ethylbromid und nach halbstündigem Rühren mit 0.64 g (3.6 mMol) Anthracen versetzt. Nach dreistündigem Rühren der Probe wird 1.28 g (4.0 mMol) $HfCl_4$ (wasserfrei) zugegeben und weitere 15 Min. gerührt. Dem Ansatz werden jetzt 5.36 g des nach der deutschen Patentanmeldung P 28 04 445.3 hergestellten Magnesiumhydrids (88%-ig, Rest THF) und 65 ml (47.0 g, 0.42 Mol) 1-Octen gegeben und der Ansatz auf Siedetemperatur erhitzt. Nach 17 Stdn. Reaktionszeit bei Siedetemperatur beträgt die Ausbeute an $Mg(C_8H_{17})_2$ 66% und nach 25 Stdn. 71% d. Th.

**Patentansprüche**

1. Verfahren zur Herstellung von Diorganomagnesiumverbindungen $R_2Mg$ durch Umsetzung von Magnesiumhydrid $MgH_2$ oder Magnesium und Wasserstoff mit einem Olefin in Gegenwart eines Katalysators, dadurch gekennzeichnet, daß man als Katalysator entweder

a) magnesiumorganische Verbindungen zusammen mit Halogeniden eines Übergangsmetalls der IV. bis VIII. Nebengruppe des periodischen Systems, oder
b) Magnesiumhydrid, das aus Magnesium und Wasserstoff (1 bis 300 bar) in Gegenwart eines policyclischen Aromaten und ggfls. noch eines tertiären Amins als Aktivatoren, bei Temperaturen von 0 bis 200°C hergestellt worden ist, zusammen mit Halogeniden der IV. bis VIII. Nebengruppe des periodischen Systems,

verwendet.

2. Verfahren nach Anspruch 1, dadurch gekennzeichnet, dass die Umsetzung in Gegenwart eines Lösungsmittels —bevorzugt in THF-durchgeführt wird.

3. Verfahren nach Anspruch 1 und 2, dadurch gekennzeichnet, dass bei Drucken von 1 bis 300 bar gearbeitet wird.

4. Verfahren nach Anspruch 1 bis 3, dadurch gekennzeichnet, dass bei Temperaturen von 0 bis 200°C gearbeitet wird.

5. Verfahren nach Ansprüchen 1 bis 4, dadurch gekennzeichnet, daß das Atomverhältnis Mg: Übergangsmetallverbindung wie $10^4$ bis 10:1 gewählt wird.

6. Verfahren nach Ansprüchen 1 bis 5, dadurch gekennzeichnet, daß as Molverhältnis Übergangsmetallverbindung: magnesiumorganischer Verbindung bzw. Magnesiumhydrid wie 0,1 bis 10:1 gewählt wird.

7. Verfahren nach Ansprüchen 1 bis 6, dadurch gekennzeichnet, dass das Molverhältnis Olefin: Magnesium wie 2 bis 10:1 gewählt wird.

8. Verfahren nach Ansprüchen 1 bis 7, dadurch gekennzeichnet, dass als Olefine bevorzugt $\alpha$-Olefine vom Typ $CH_2$=CHR' mit R'=H, Alkyl, Cycloalkyl, Aryl oder Aralkylgruppen eingesetzt werden.

9. Verfahren nach Ansprüchen 1 bis 8, dadurch gekennzeichnet, daß anstelle des Magnesiumhydrids Magnesium und Wasserstoff zur Reaktion mit einem Olefin eingesetzt werden.

**Revendications**

1. Procédé de préparation de composés diorganomagnésiens $R_2Mg$ par réaction d'hydrure de magnésium $MgH_2$ ou de magnésium et d'hydrogène sur une oléfine en présence d'un catalyseur, procédé caractérisé en ce qu'on utilise en tant que catalyseur ou bien (a) des composés organomagnésiens, en même temps que des halogénures d'un métal de transition de sous groupes IV à VIII du tableau périodique ou bien (b) de l'hydrure de magnésium, lequel a été préparé à partir de magnésium et d'hydrogène (1 à 300 bars) en présence d'un aromatique polycyclique et éventuellement encore d'une amine tertiaire en tant qu'activateurs, à des températures de 0 à 200°C, en même temps que des halogénures d'un métal de transition du sous groupe IV à VIII du tableau périodique.

2. Procédé selon la revendication 1, caractérisé en ce que la réaction s'effectue en présence d'un solvant, de préférence dans le THF.

3. Procédé selon l'une quelconque des revendications 1 ou 2, caractérisé en ce qu'on travaille à des pressions de 1 à 300 bars.

4. Procédé selon l'une quelconque des revendications 1 à 3, caractérisé en ce qu'on travaille à des températures de 0 à 200°C.

5. Procédé selon l'une quelconque des revendications 1 à 4, caractérisé en ce que l'on choisit pour le rapport atomique Mg: composé d'un métal de transition dans le mélange réactionnel une valeur de $10^4$ à 10:1.

6. Procédé selon l'une quelconque des revendications 1 à 5, caractérisé en ce que l'on choisit pour le rapport molaire composé d'un métal de transition: composé organomagnésien ou hydrure de magnésium une valeur de 0,1 à 10:1.

7. Procédé selon l'une quelconque des revendications 1 à 6, caractérisé en ce qu'on choisit pour le rapport molaire oléfine: magnésium une valeur de 2 à 10:1.

8. Procédé selon l'une quelconque des revendications 1 à 7, caractérisé en ce qu'on utilise de préférence en tant qu'oléfines des $\alpha$-oléfines du type $CH_2$=CHR', R' étant l'hydrogène ou un radical alkyle, cycloalkyle, aryle ou aralkyle.

9. Procédé selon l'une quelconque des revendications 1 à 8, caractérisé en ce qu'on utilise à la place de l'hydrure de magnésium, du magnésium et de l'hydrogène pour la réaction sur une oléfine.

**Claims**

1. A process for preparing diorganomagnesium compounds $R_2Mg$ by reaction of magnesium hydride $MgH_2$ or magnesium and hydrogen with an olefin in the presence of a catalyst, characterized in that

a) either organomagnesium compounds together with halides of a transition metal of sub-group IV to VIII of the Periodic Table
b) or magnesium hydride having been prepared from magnesium and hydrogen (1 to 300 bar) in the presence of polycyclic aromatics and optionally an additional tertiary amine as the activators at temperatures from 0°C to 200°C together with halides of subgroup IV to VIII of the Periodic Table

are used as the catalysts.

2. The process according to claim 1, characterized in that the reaction is carried out in the presence of a solvent—and preferably THF-.

3. The process according to any one of claims 1 and 2, characterized in that there is operated at pressures from 1 to 300 bar.

4. The process according to any one of claims 1 to 3, characterized in that there is operated at temperatures from 0°C to 200°C.

5. The process according to any one of claims 1 to 4, characterized in that in the reaction mixture the atomic ratio Mg: transition metal compound is selected to be from $10^4$ to 10:1.

6. The process according to any one of claims 1 to 5, characterized in that the molar ratio transition metal compound: organomagnesium compound or magnesium hydride, respectively, is selected to be from 0,1 to 10:1.

7. The process according to any one of claims 1 to 6, characterized in that the molar ratio olefin: magnesium is selected to be from 2 to 10:1.

8. The process according to any one of claims 1 to 7, characterized in that $\alpha$-olefins of the type $CH_2$=CHR′ wherein R′=H, alkyl, cycloalkyl, aryl or aralkyl groups, are preferably employed as the olefins.

9. The process according to any one of claims 1 to 8, characterized in that magnesium and hydrogen are employed in the place of magnesium hydride for the reaction with an olefin.